# EUROPEAN PATENT APPLICATION

(11) **EP 4 131 713 A1**
(43) Date of publication of application: **08.02.2023**
(21) Application number: 22165373.6
(22) Date of filing: 30.03.2022
(51) Int. Cl.: H02J 7/00, H02J 50/00, H02J 50/40

(54) **WIRELESS CHARGING TABLE AND METHOD FOR MANUFACTURING THE SAME**

(30) Priority: 04.08.2021 CN 202110893212; 11.11.2021 CN 202111331975
(71) Applicant: Promix Smart Home Limited, Yantai City, Shandong 264003 (CN)
(72) Inventor: CHEN, Yunjin, Yantai City, 264003 (CN)
(74) Representative: Stiel, Jürgen

(57) **Abstract**

A wireless charging table and a method for manufacturing the same are disclosed. The wireless charging table includes: a board assembly, where the board assembly includes a table top for placing charged components, and the table top is provided with a plurality of charging regions; a wireless charging device in an accommodating chamber within the board assembly, where the wireless charging device is configured for non-contact charging of the charged components located on the plurality of charging regions. The wireless charging device is configured to provide different rated powers to the charged components on different ones of the plurality of charging regions. Since the table is provided with a plurality of charging regions for providing different rated powers, the charged components with different rated powers can be charged in a targeted manner, which saves power on the one hand, and improves cleanliness of the table top on the other hand.

## Description

### TECHNICAL FIELD

The present disclosure relates to a field of furniture, in particular to a wireless charging table and a method for manufacturing the same.

### BACKGROUND

With improvement of living standards, an electronic device is usually used for a long time in daily life. Due to limitations of battery capacity, the electronic device needs to be frequently charged.

However, when charging the electronic device with a charging cable, the charging cable placed on a table top will cause the table top to look messy and affect cleanliness of the table.

### SUMMARY

In view of the above problems, the present disclosure is proposed to provide a wireless charging table and a method for manufacturing the same.

According to some embodiments of the present disclosure, a wireless charging table is provided and includes: a board assembly, wherein the board assembly includes a table top for placing charged components, and the table top is provided with a plurality of charging regions; a wireless charging device in an accommodating chamber within the board assembly, wherein the wireless charging device is configured for non-contact charging of the charged components located on the plurality of charging regions. The wireless charging device is configured to provide different rated powers to the charged components on different ones of the plurality of charging regions.

According to some embodiments of the present disclosure, a method for manufacturing the wireless charging table is provided and includes:

forming an accommodating groove in a first board body and forming an accommodating hole in a second board body; placing the wireless charging device in the accommodating groove and the accommodating hole; fixedly connecting the first board body to the second board body with the accommodating groove in communication with the accommodating hole; using an edge banding strip to perform veneer edge sealing on circumferential side surfaces of the first board body and the second board body to form a board assembly which includes a table top for placing charged components.

According to the wireless charging table in some embodiments of the present disclosure, the table is provided with a plurality of charging regions for providing different rated powers, and then the charged components with different rated powers can be charged in a targeted manner, which saves power on the one hand, and improves cleanliness of the table top on the other hand.

Additional aspects and advantages of the present disclosure will be set forth in part in the description which follows and, in part, will be obvious from the description, or may be learned by practice of the present disclosure.

### BRIEF DESCRIPTION OF THE DRAWINGS

The foregoing and/or additional aspects and advantages of the present disclosure will become apparent and more readily appreciated from the following description of the embodiments, taken in conjunction with the accompanying drawing, in which:
FIG. 1 shows an exploded view of a wireless charging table according to an embodiment of the present disclosure;
FIG. 2 shows a top view of a first board body of the wireless charging table matched with a wireless charging device according to an embodiment of the present disclosure;
FIG. 3 shows a schematic diagram of a second board body of the wireless charging table according to an embodiment of the present disclosure;
FIG. 4 shows an exploded view of a board assembly of the wireless charging table matched with a wireless charging device according to an embodiment of the present disclosure;
FIG. 5 shows a top view of the wireless charging table of FIG. 4;
FIG. 6 shows a schematic diagram of an installation plate of a wireless charging table according to an embodiment of the present disclosure;
FIG. 7 shows another schematic diagram of the installation plate of the wireless charging table of FIG. 6 viewed from another angle;
FIG. 8 shows a schematic diagram of connection of a wireless charging device of a wireless charging table according to an embodiment of the present disclosure;
FIG. 9 shows a flow chart of assembling a wireless charging table according to an embodiment of the present disclosure;
FIG. 10 shows a flow chart of a method for manufacturing a wireless charging table according to an embodiment of the present disclosure;
FIG. 11 shows a perspective view of a wireless charging device and a connecting wire placed in a first main body of a wireless charging table according to another embodiment of the present disclosure;
FIG. 12 shows an enlarged view of a part A in FIG. 11;
FIG. 13 shows a schematic diagram of connection between a wireless charging device and a connecting wire of a wireless charging table according to an embodiment of the present disclosure;
FIG. 14 shows a schematic diagram of a first main body of a wireless charging table according to an embodiment of the present disclosure;
FIG. 15 shows a flow chart of assembling a wireless charging table according to an embodiment of the present disclosure;
FIG. 16 shows a flow chart of a method for manufacturing a wireless charging table according to an embodiment of the present disclosure; and
FIG. 17 shows an exploded view of a wireless charging table according to another embodiment of the present disclosure.

| | |
|---|---|
| | |
| Reference signs of main elements: | |
| wireless charging table 10; | board assembly 100; |
| accommodating chamber 130; | accommodating groove 131; |
| accommodating hole 132; | power interface 133; |
| first board body 140; | second board surface 141; |
| second board body 150; | third board surface 151; |
| fourth board surface 152; | edge banding strip 160; |
| wireless charging device 200; | first charging device 210; |
| first charging coil 211; | first circuit board 212; |
| second charging device 220; | second charging coil 221; |
| second circuit board 222; | power socket 230; |
| step-up constant voltage and constant current module 240; | |
| step-down constant voltage constant current module 250; | |
| installation plate 300; | fifth board surface 310; |
| sixth board surface 320; | wire feed hole 330; |
| heat dissipation hole 340; | screw hole 350; |
| wireless charging table 10a; | table top 20; |
| table legs 30; | wireless charging device 1000; |
| connecting wire 2000; | port 2100; |
| first main body 3000; | accommodating groove 3100; |
| first groove 3110; | second groove 3120; |
| first side surface 3210; | second side surface 3220; |
| second main body 4000; | edge banding strip 500; |
| third opening 510. | |

### DETAILED DESCRIPTION OF EMBODIMENTS

In order to make the objectives, technical solutions and advantages of the present disclosure more clear, the technical solutions of the present disclosure are clearly and completely described below with reference to the drawings of the embodiments of the present disclosure. However, the described embodiments are only a part but not all of the embodiments of the present disclosure. Based on the embodiments of the present disclosure, all other embodiments obtained by those of ordinary skilled in the art without carrying out creative work fall within the scope of protection of the present disclosure.

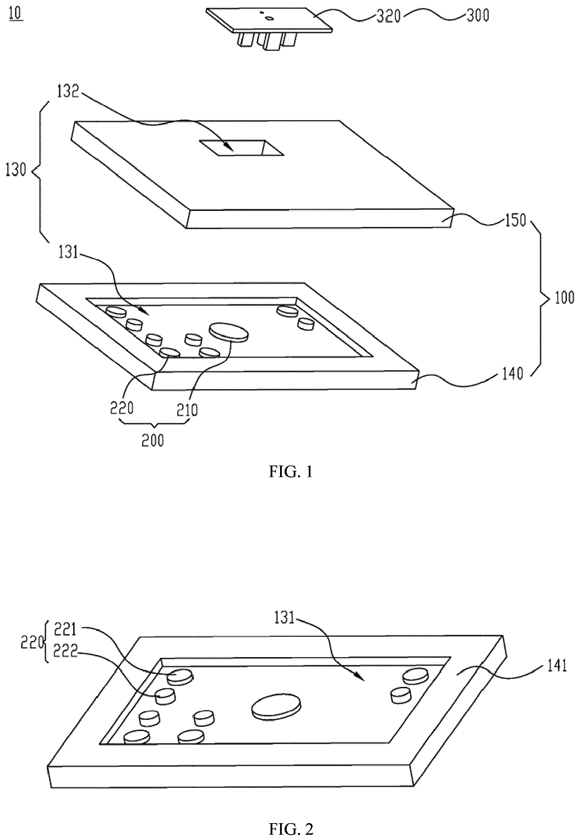

FIG. 1 shows an exploded view of a wireless charging table according to an embodiment of the present disclosure. Referring to FIG. 1, the wireless charging table 10 includes a board assembly 100 and a wireless charging device 200. The board assembly 100 includes a table top for placing a charged component. The table top is provided with a plurality of charging regions. The wireless charging device 200 is disposed in an accommodating chamber 130 inside the board assembly 100, and is used for non-contact charging of charged components located on the plurality of charging regions. The wireless charging device 200 is used to provide different rated powers to the charged components on different charging regions.

Further, the wireless charging device 200 may use electromagnetic induction to charge the charged component. The charged component may be a low-power electronic device such as a mobile phone and a tablet, or may be a high-power electronic device such as a notebook computer. Energy transfer is realized through energy coupling of a coil, that is, a coil may be connected with an external power supply to generate magnetic field, and then the magnetic field generates current to supply power to a charged component.

Further, since the wireless charging device 200 can realize non-contact charging, the charged component can be charged without contacting the wireless charging device 200, and then there is no need to connect a charging device to the charged component with a charging cable, thereby avoiding clutter on the table top caused by placing too many cables on the table top. Moreover, disposing the wireless charging device 200 in the accommodating chamber 130 inside the board assembly 100 can prevent the wireless charging device 200 from being worn and prolong service life of the wireless charging device 200.

Specifically, the wireless charging device 200 may continuously provide a small power of less than or equal to 20W to the charged component, such as a mobile phone, a tablet, a table lamp, and a Bluetooth headset. The wireless charging device 200 may also provide a high power of more than 20W to the charged component, such as a computer, and a speaker. On the table top, there are multiple charging regions for providing different rated powers, and then the charged components with different rated powers can be charged in a targeted manner, which saves power on the one hand, and improves cleanliness of the table top on the other hand.

FIG. 2 shows a top view of a first board body 140 of the wireless charging table 10 matched with a wireless charging device 200 according to an embodiment of the present disclosure. Referring to FIG. 2, the wireless charging device 200 includes at least one first charging device 210 and at least one second charging device 220. The at least one first charging device 210 is disposed in the accommodating chamber 130 and each first charging device 210 is used to provide a first rated power. The at least one second charging device 220 is disposed in the accommodating chamber 130 and each second charging device 220 is used to provide a second rated power. The first rated power is greater than the second rated power.

The multiple charging regions at least include a first charging region and a second charging region. The first charging device 210 is used to provide the first rated power to the charged component located on the first charging region. The second charging device 220 is used to provide the second rated power to the charged component located on the second charging region.

Further, positions of the charging regions may be marked on the table top in a literary or graphic manner, so that a user can accurately find the charging regions. In some embodiments, the first charging region and the second charging region may be marked differently for differentiation.

Further, the first charging region and the second charging region may provide charging separately, or provide charging simultaneously.

The multiple charging regions include at least one first charging region and at least one second charging region. The first charging regions are corresponding to the first charging devices 210 in a one-to-one manner. The second charging regions are corresponding to the second charging devices 220 in a one-to-one manner.

Specifically, the wireless charging device 200 may include one first charging device 210 and four second charging devices 220; correspondingly, the multiple charging regions include one first charging region and four second charging regions. In order to facilitate the user's operation and access, a projection of an accommodating groove 131 onto a first board surface is a rectangle. The first charging device 210 is located in the middle of the rectangular accommodating groove 131, and the four second charging devices 220 are located at different positions of the rectangular accommodating groove 131. The projection of the accommodating groove 131 onto the first board surface is related to the numbers and relative positions of the first charging device 210 and the second charging device 220. In other embodiments, the projection of the accommodating groove 131 onto the first board surface may be a circular shape, an H-shaped shape, or a shape of Chinese word " 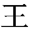 ", etc., in which the wireless charging device 200 can be disposed.

Each first charging device 210 includes a first charging coil 211 and a first circuit board 212 that are electrically connected. The first charging coil 211 is located within a projection of the first charging region onto the accommodating chamber 130. Each second charging device 220 includes a second charging coil 221 and a second circuit board 222 that are electrically connected. The second charging coil 221 is located within a projection of the second charging region onto the accommodating chamber 130.

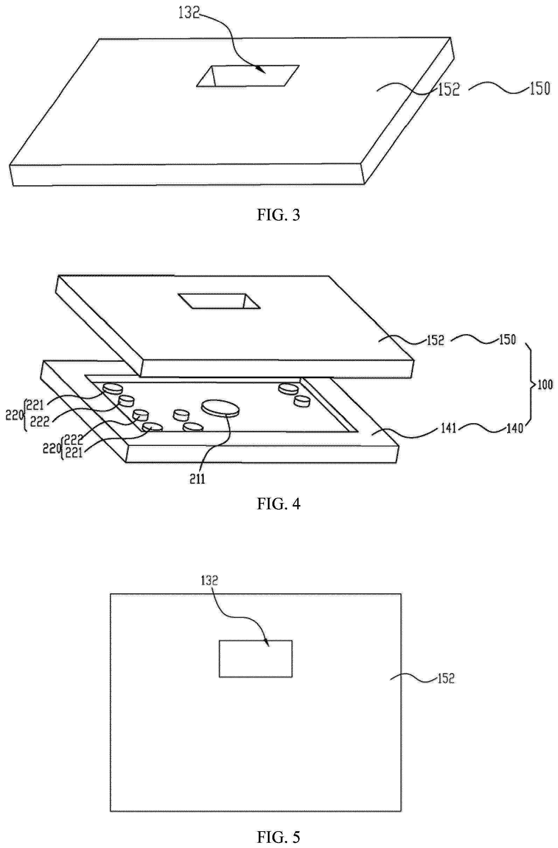

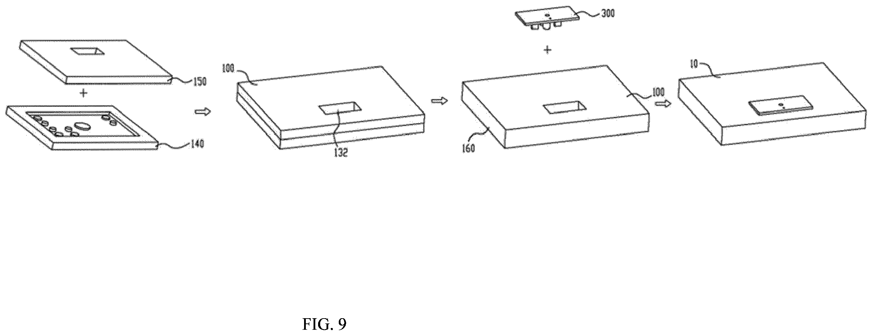

FIG. 4 shows an exploded view of the board assembly 100 of the wireless charging table 10 matched with the wireless charging device 200 according to an embodiment of the present disclosure. FIG. 9 shows a flow chart of assembling the wireless charging table 10 according to an embodiment of the present disclosure. Referring to FIG. 4 and FIG. 9, the board assembly 100 includes a first board body 140, a second board body 150 and an edge banding strip 160. The first board body 140 includes a first board surface serving as a table top and a second board surface 141 disposed opposite to the first board surface. The first board body 140 is connected to the second board body 150. A third board surface 151 of the second board body 150 is in contact with the second board surface 141. The edge banding strip 160 is fixedly connected to circumferential side surfaces of the first board body 140 and the second board body 150.

Further, the shapes and sizes of the first board body 140 and the second board body 150 may be the same to facilitate standardized production.

Further, the first board body 140 and the second board body 150 are fixedly connected, for example, adhesively fixed, so as to form a table top for placing the charged component. That is, no relative displacement occurs between the first board body 140 and the second board body 150.

Further, the edge banding strip 160 may be fixedly connected to the circumferential side surfaces of the first board body 140 and the second board body 150 by bonding, which can be visually integrated to improve the appearance.

Referring to FIG. 1, the accommodating chamber 130 includes an accommodating groove 131. The accommodating groove 131 is defined in the first board body 140. A first opening is defined in the second board surface 141. A notch of the accommodating groove 131 is communicated with the first opening. Each first charging device 210 at least includes a first charging coil 211, and each second charging device 220 includes a second charging coil 221 and a second circuit board 222 that are electrically connected. The first charging coil 211, the second charging coil 221 and the second circuit board 222 are all fixed on a bottom wall of the accommodating groove 131.

Further, the first charging coil 211, the second charging coil 221 and the second circuit board 222 are fixed in the accommodating groove 131 by a fixing part. The fixing part may be a viscous part such as tape and glue. On the one hand, the relative positions of the first charging coil 211 and the second charging coil 221 with respect to the charging region can be fixed through the fixing part, thereby improving charging accuracy. On the other hand, the fixing part can prevent the positions of the first charging coil 211 and the second charging coil 221 from changing with movement of the wireless charging table 10, thereby avoiding noise and wear.

FIG. 3 shows a schematic diagram of the second board body 150 of the wireless charging table according to an embodiment of the present disclosure. Referring to FIG. 3, the second board body 150 includes a fourth board surface 152 disposed opposite to the third board surface 151. The accommodating chamber 130 includes an accommodating hole 132. The accommodating hole 132 is defined through the second board body 150. A second opening is defined in the third board surface 151. A third opening is defined in the fourth board surface 152. Openings of the accommodating hole 132 are communicated with the second opening and the third opening, respectively. The accommodating groove 131 is communicated with the accommodating hole 132.

Specifically, projections of the accommodating holes 132 onto the third board surface 151 and the fourth board surface 152 are both rectangular; that is, a through hole is defined through the second board body 150 and extends through the third board surface 151 and the fourth board surface 152. On the one hand, the accommodating hole 132 may be used to accommodate the first circuit board 212, a first module, a second module and a power socket 230. On the other hand, the accommodating hole 132 can allow a power cable connected to a power connector to pass through for connecting an external power.

In some embodiments, a projection of the second opening onto the bottom wall of the accommodating groove covers the second circuit board 222, which facilitates replacement of the second circuit board 222 and facilitates connection between the second circuit board 222 and a step-down constant voltage constant current module 250. In other embodiments, FIG. 5 shows a top view of the wireless charging table 10 of FIG. 4. Referring to FIG. 5, the second circuit board 222 is located between the third board surface 151 and the bottom wall of the accommodating groove 131.

The wireless charging table 10 further includes an elastic member. The elastic member is disposed between the second charging coil 221 and the second board body 150. One side of the elastic member is in contact with the second charging coil 221, and the other side of the elastic member is in contact with the third board surface 151; and/or, the elastic member is disposed between the first charging coil 211 and the second board body 150, one side of the elastic member is in contact with the first charging coil 211, and the other side of the elastic member is in contact with the third board surface 151.

Further, the elastic member may be made of an elastic, non-conductive material such as foam or rubber. In case that a thickness of the first charging coil 211 or the second charging coil 221 is less than a depth of the accommodating groove 131, the elastic member may be provided, so that the position of the first charging coil 211 relative to the first charging region is fixed or the position of the second charging coil 221 relative to the second charging region is fixed.

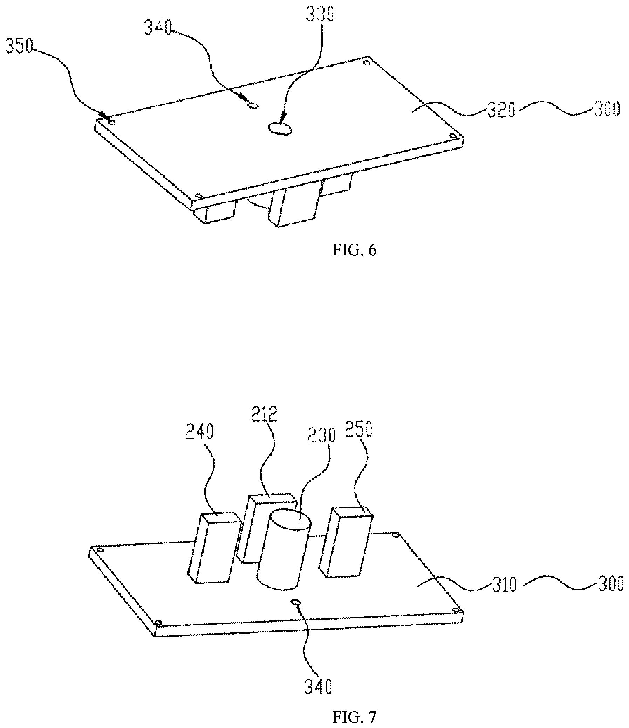

FIG. 7 shows another schematic diagram of an installation plate 300 of the wireless charging table 10 of FIG. 6 viewed from another angle. Referring to FIG. 7, the wireless charging device 200 further includes a first module and a second module. The first module may be connected to an external power supply and provide a voltage higher than a first voltage to the first charging device 210. The second module may be connected to the external power supply and provide a voltage lower than the first voltage to the second charging device 220. The first voltage is a rated voltage provided by the external power supply.

Further, the first module and the second module may further intelligently adjust energy consumption according to a real-time use state of the charged component. In case that an energy consumption of the charged component increases or decreases, the first module and the second module may simultaneously increase or decrease the energy consumption of the wireless charging device 200, thereby improving energy efficiency.

Further, the first module may support the PD protocol, and the second module may support the QC protocol, so as to provide non-contact power supply to different charged components.

A power cable connected to the first charging device 210 is connected to the first module through a power connector. A power cable connected to the second charging device 220 is connected to the second module through a power connector.

Further, the power connector may connect the first circuit board 212 and the second circuit board 222 in parallel.

Further, an interface may be a USB interface or a DC power interface; correspondingly, the power cable may be a USB connection cable or a DC power cable.

Referring to FIG. 7, the first module at least includes a step-up constant voltage and constant current module 240, and the second module at least includes a step-down constant voltage and constant current module 250.

Further, the step-up constant voltage and constant current module 240 is used to step up the first voltage and then stably output it to the first charging device 210. The step-down constant voltage and constant current module 250 is used to step down the first voltage and then stably output it to the second charging device 220.

Referring to FIG. 1, the wireless charging table 10 further includes an installation plate 300. The installation plate 300 is connected to the board assembly 100. The first module and the second module are both connected to one side of the installation plate 300 facing the board assembly 100. The installation plate 300 is used to cover the third opening. The first module and the second module may be placed into the accommodating hole 132 through the third opening.

Further, the installation plate 300 may further be provided with screw holes 350 to facilitate connection of the installation plate 300 to the board body assembly 100 through screws.

The first charging device 210 at least includes a first circuit board 212. The first circuit board 212 is connected to the side of the installation plate 300 facing the board assembly 100. The first circuit board 212 may enter into the accommodating hole 132 through the third opening.

Further, the rated power provided by the wireless charging device 200 is related to an occupied volume of the circuit board. When the occupied volume is larger, the rated power provided by the wireless charging device 200 is larger. Since the rated power provided by the first charging device 210 is greater than the rated power provided by the second charging device 220, an occupied space of the first circuit board 212 is larger than an occupied space of the second circuit board 222. In case that the first circuit board 212 and the second circuit board 222 are all located between the bottom wall of the accommodating groove 131 and the third board surface 151, in order to satisfy the occupied space of the first circuit board 212, the accommodating groove 131 is relatively deep. In order to satisfy the depth of the accommodating groove 131, a thickness of the first board body 140 is relatively thick. In order to facilitate processing, the first board body 140 and the second board body 150 are made of plates of the same specification. That is, the board assembly 100 is thicker, and the entire table 10 is bulky and difficult to carry. In order to reduce the thickness of the board assembly 100, the second board 150 is provided with the accommodating hole 132, and the first circuit board 212 may be located in the accommodating hole 132, or in a space defined by the accommodating hole 132 and the accommodating groove 131.

In some embodiments, the first circuit board 212 may also be connected to the bottom wall of the accommodating groove 131, and a portion of the first circuit board 212 beyond the depth of the accommodating groove 131 may be located in the accommodating hole 132. When fabricating the table 10, the first circuit board 212 is first connected to the bottom wall of the accommodating groove 131 in such a manner that a projection of the second opening onto the bottom wall of the accommodating groove 131 needs to cover the first circuit board 212; and then, the second board body 150 and the first board body 140 are connected so that at least part of the first circuit board 212 is located in the accommodating hole 132. In other embodiments, the first circuit board 212 is connected to the installation plate 300. When the installation plate 300 is connected to the board assembly 100, the first circuit board 212 may be sequentially inserted into the accommodating hole 132 and accommodating groove 131 through the third opening. When fabricating the table 10, the first board body 140 and the second board body 150 may first assembled into the board assembly 100, and then the installation board 300 is installed on the board assembly 100, so that components on the installation board 300 enter into the accommodating hole 132 through the third opening. Since the position of the third opening is found through the installation plate 300, the installation is convenient, thereby avoiding problems that the first board body 140 and the second board body 150 cannot be assembled or the installation plate 300 and the board body assembly 100 cannot be assembled, due to alignment problem between the accommodating hole 132 and the first circuit board 212.

Specifically, the installation plate 300 includes a fifth board surface 310 and a sixth board surface 320 disposed opposite to each other. The second board body 150 is located between the first board body 140 and the installation plate 300. The fifth board surface 310 is in contact with the fourth board surface 152.

The wireless charging device 200 further includes a power socket 230. The power socket 230 is connected to one side of the installation plate 300 facing the board assembly 100, and can enter the accommodating hole 132 through the third opening. The installation plate 300 is provided with a wire feed through hole 330. The wire feed through hole 330 is communicated with the accommodating hole 132. Jacks of the power socket 230 are located at an opening of the wire feed through hole 330 for connecting external power supply.

Further, since the power socket 230 is located in the accommodating hole 132 and the installation plate 300 is disposed at an outside of the power socket 230, thereby avoiding discomfort and safety hazards caused by the power socket 230 being located at an outside of the wireless charging table 10.

Further, a power male head of the external power supply may be inserted into the wire feed through hole and connected to the jack of the power socket 230 to realize power supply of the first charging device 210 and the second charging device 220.

The first module and the second module are connected to the power socket 230 in parallel.

Specifically, the step-up constant voltage and constant current module 240 and the step-down constant voltage and constant current module 250 are connected to the power socket 230 in parallel, thereby enabling one power cable to solve different voltage and current requirements of charged components of different power ratings when charging the charged components of different power ratings.

Further, the first voltage of 24 volts input by the external power supply enters the DC power socket 230, and then is divided into two paths through a one-to-two DC power cord. One of the two paths enters the step-up constant voltage and constant current module 240, and rises to a voltage of 28 to 32 volts to drive the first wireless charging device 200 to emit electromagnetic waves. The other one of the two paths enters the step-down constant voltage and constant current module 250 and is reduced to 9 to 12 volts to drive the second wireless charging device 200 to emit electromagnetic waves. The charged components placed in different charging regions receive the electromagnetic waves emitted by the wireless charging devices 200 inside the board assembly 100 and convert them into electrical energy, thereby realizing non-contact charging.

FIG. 6 shows a schematic diagram of the installation plate 300 of the wireless charging table 10 according to an embodiment of the present disclosure. Referring to FIG. 6, the installation plate 300 is provided with at least one heat dissipation hole 340. The heat dissipation hole 340 is communicated with the accommodating chamber 130 for allowing gas in the accommodating chamber 130 to communicate with gas in external environment through the heat dissipation hole 340.

The board body assembly 100 may be an integral part, which is convenient for processing and production.

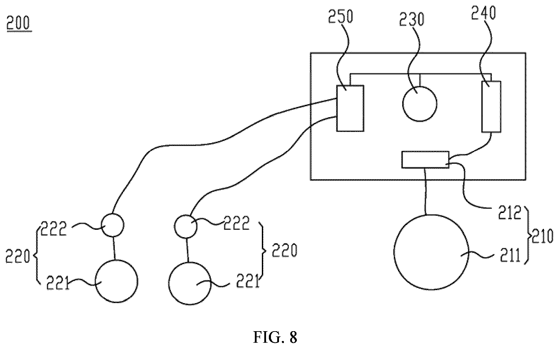

FIG. 8 shows a schematic diagram of connection of the wireless charging device 200 of the wireless charging table 10 according to an embodiment of the present disclosure. Referring to FIG. 8, the wireless charging device 200 of this embodiment includes two second charging devices 220 and one first charging device 210. The first charging coil 211 is connected to the first circuit board 212. The first circuit board 212 is connected to the step-up constant voltage and constant current module 240. The step-up constant voltage and constant current module 240 is connected to the power socket 230. The two second charging coils 221 are respectively connected to different second circuit boards 222, and the two second circuit boards 222 are connected in parallel to the step-down constant voltage and constant current module 250. The step-down constant voltage and constant current module 250 and the step-up constant voltage and constant current module 240 are connected in parallel to the power socket 230.

The present embodiment will be described hereinafter with the wireless charging table 10 shown in FIG. 1 as an example, but the present disclosure is not limited thereto.

A rectangular accommodating groove 131 is defined in the first board body 140. The wireless charging device 200 includes one first charging device 210 and four second charging devices 220. A rated power provided by the first charging device 210 is greater than a rated power provided by the second charging device 220. The first charging device 210 is located in the middle of the accommodating groove 131; correspondingly, a first charging region is located in the middle of the table top. The four second charging devices 220 are located at different positions of the rectangular accommodating groove 131; correspondingly, second charging regions are located at corresponding positions. According to the user's usage habits, a computer that can be wirelessly charged may be placed in the middle of the table 10; and a low-power electronic device such as a mobile phone that can be wirelessly charged or a Bluetooth headset that can be wirelessly charged, may be placed on the left-hand side or the right-hand side. A low-power electronic device such as a table lamp that can be wirelessly charged, a Bluetooth headset that can be wirelessly charged, and a speaker that can be wirelessly charged, may be placed at left and right sides of an upper position, which are convenient for operation and access.

In this embodiment, the wireless charging device 200 is packaged inside the board assembly 100; when a charged component needs to be charged, it is only needed to place the charged component on a corresponding position of the charging region, thereby starting to charge the charged component. In addition, there is no notch in a use surface of the table 10 for placing the charged components, but the wire feed through hole 330 is provided at a bottom of the table 10 so that the power cable is connected to the power supply through the opening. This not only solves the problem of cluttered charging cables caused by wired charging, but also ensures the integrity and aesthetics of the use surface of the table 10, and prevents more dust from entering the table 10 through the holes in the installation plate 300.

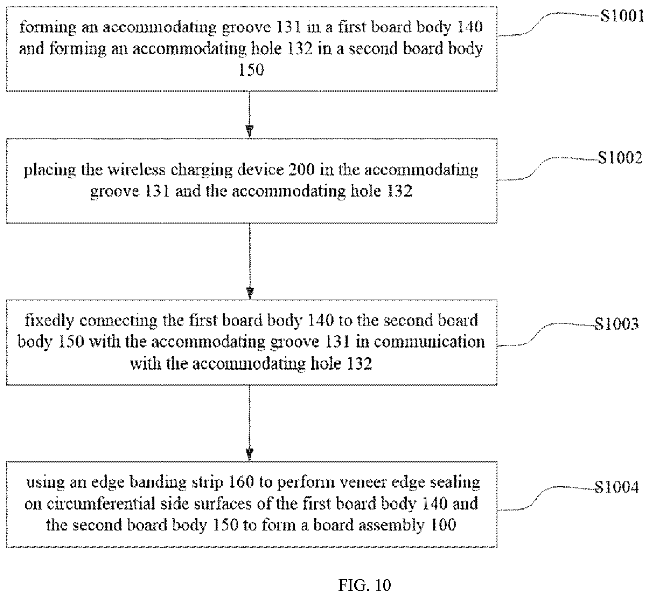

The wireless charging table 10 includes the board assembly 100 and the wireless charging device 200. The board assembly 100 includes the first board body 140 and the second board body 150. FIG. 10 shows a flow chart of a method for manufacturing the wireless charging table 10 of the present disclosure. Referring to FIG. 9 and FIG. 10, the method includes the following steps S1001 to S1004.

Step S1001: forming an accommodating groove 131 in a first board body 140 and forming an accommodating hole 132 in a second board body 150. The first board body 140 and the second board body 150 may both be made of Hexiang board. The Hexiang board is made by performing high temperature and high pressure processing on materials which include crop straw scraps as main raw material, MDI glue and functional additives. The Hexiang board is not only aldehyde-free and environmentally friendly, but also has excellent processing performance and surface decoration performance, and is suitable for various surface decoration treatments and mechanical processing. Common specifications of the Hexiang board are generally 9mm, 18mm and 25mm. Considering the thickness of the first circuit board 212 and the second circuit board 222, the Hexiang board of 18mm may be selected. The depth of the accommodating groove 131 is in the range of 8 to 10 mm. A distance between the accommodating groove 131 and a lateral surface of the first board body 140 may be in the range of 10 to 15 cm. According to occupied areas of the first circuit board 212, the power socket 230, the step-up constant voltage and constant current module 240 and the step-down constant voltage and constant current module 250 and the relative positions of the four, the accommodation hole 132 is defined in the second board body 150, so that the first circuit board 212, the power socket 230, the step-up constant voltage and constant current module 240 and the step-down constant voltage and constant current module 250 can be placed in the accommodating hole 132.

Step S1002: placing the wireless charging device 200 in the accommodating groove 131 and the accommodating hole 132.

Step S1003: fixedly connecting the first board body 140 to the second board body 150 with the accommodating groove 131 in communication with the accommodating hole 132. The first board body 140 and the second board body 150 may be fixed by bonding.

Step S1004: using an edge banding strip 160 to perform veneer edge sealing on circumferential side surfaces of the first board body 140 and the second board body 150 to form a board assembly 100. The board assembly 100 includes a table top for placing charged components. The first board body 140 and the second board body 150 after veneer edge sealing are combined into one to form the board assembly 100, which is a single board from the appearance, thereby improving the aesthetics of the table 10.

The wireless charging table 10 further includes an installation plate 300. The step S1002 further includes the following steps S1021 to S1022.

Step S1021: connecting the first charging coil 211, the second charging coil 221 and the second circuit board 222 of the wireless charging device 200 to a bottom wall of the accommodating groove 131. The first charging coil 211, the second charging coil 221, the second circuit board 222 and the power cable may be fixed to the bottom wall of the accommodating groove 131 by bonding. At this point, a power connector may be located at a projection of the second opening onto the bottom wall of the accommodating groove 131, to facilitate subsequent connection of the power connector to the step-up constant voltage and constant current module 240 and the step-down constant voltage and constant current module 250.

Step S1022: connecting the first circuit board 212, the first module, the second module and the power socket 230 of the wireless charging device 200 to a first side surface of the installation plate 300, and then electrically connecting the first circuit board 212 to the first module. The first circuit board 212 may be electrically connected to the first module by welding.

The Step S1003 includes the following steps S1031 and S1032.

Step S1031: placing the first board body 140 and the second board body 150 overlapped with each other, and fixing them with strong glue. The first board body 140 and the second board body 150 are overlapped and placed to ensure the integrity of the appearance of the table 10.

Step S1032: first electrically connecting the first circuit board 212 to the first charging coil 211, then connecting the power connector connected to the second charging device 220 to the second module, and then placing the first circuit board 212, the first module, the second module and the power socket 230 into the accommodating hole 132 through the opening of the accommodating hole 132, and connecting the installation plate 300 to the second board body 150 with the installation plate 300 covering the opening of the accommodating hole 132.

In some embodiments, the table 10 may be made of wood, glass, plastic, or the like.

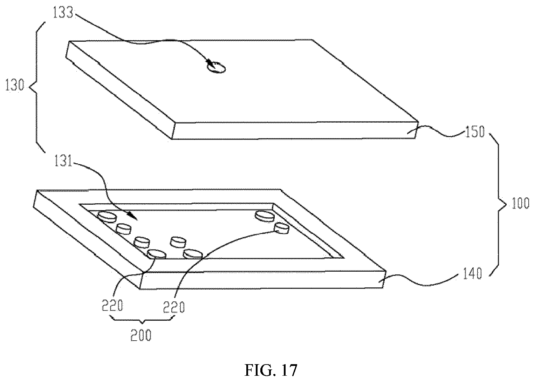

FIG. 17 shows an exploded view of a wireless charging table according to another embodiment of the present disclosure. Referring to FIG. 17, the wireless charging table includes a board assembly 100 and a wireless charging device 200. The board assembly 100 includes a table top for placing a charged component. The table top is provided with a plurality of charging regions. The wireless charging device 200 is disposed in an accommodating chamber 130 inside the board assembly 100, and is used for non-contact charging of charged components located on the plurality of charging regions. The wireless charging device 200 is used to provide same or different rated powers to the charged components on different charging regions.

Further, the wireless charging device 200 may use electromagnetic induction to charge the charged component. The charged component may be a low-power electronic device such as a mobile phone and a tablet. Energy transfer is realized through energy coupling of a coil, that is, a coil may be connected with an external power supply to generate magnetic field, and then the magnetic field generates current to supply power to a charged component.

Further, since the wireless charging device 200 can realize non-contact charging, the charged component can be charged without contacting the wireless charging device 200, and then there is no need to connect a charging device to the charged component with a charging cable, thereby avoiding clutter on the table top caused by placing too many cables on the table top. Moreover, disposing the wireless charging device 200 in the accommodating chamber 130 inside the board assembly 100 can prevent the wireless charging device 200 from being worn and prolong service life of the wireless charging device 200.

Specifically, the wireless charging device 200 may continuously provide a small power of less than or equal to 20W to the charged component, such as a mobile phone, a tablet, a table lamp, and a Bluetooth headset. On the table top, there are multiple charging regions for providing same or different rated powers which are less than or equal to 20W, and then multiple charged components can be charged accordingly.

Specifically, the wireless charging device 200 includes at least one second charging device 220. The at least one second charging device 220 is disposed in the accommodating chamber 130 and each second charging device 220 is used to provide a second rated power.

The accommodating chamber 130 includes an accommodating groove 131. The accommodating groove 131 is defined in the first board body 140. Each second charging device 220 is fixed on a bottom wall of the accommodating groove 131.

The accommodating chamber 130 further includes a power interface 133. The power interface 133 is defined through the second board body 150 and is communicated with the accommodating groove 131, so that the second charging device 220 is electrically connected to the power interface 133 through a connecting wire provided within the accommodating chamber 130, and then is connected with an external power supply. By arranging the power interface 133 in a surface of the second board body 150 opposite to the first board body 140, a power connector can be prevented from being touched and damaged or hitting a wall due to someone walking by, which not only improves safety, but also improves reliability.

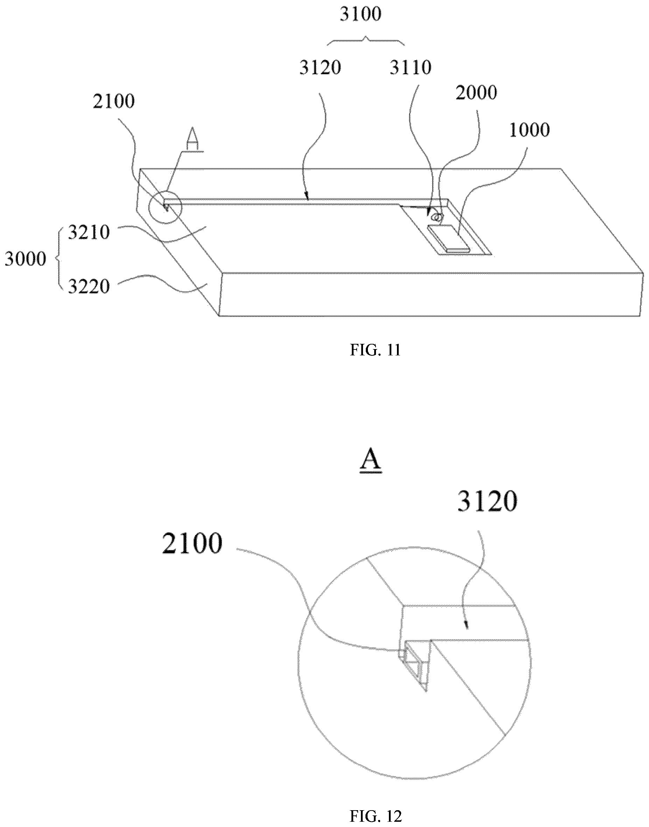

FIG. 11 shows a perspective view of a wireless charging device 1000 and a connecting wire 2000 placed in a first main body (also referred to as a first board body) 3000 of a wireless charging table 10a according to another embodiment of the present disclosure. FIG. 12 shows an enlarged view of a part A in FIG. 11. Referring to FIG. 11 and FIG. 12, the wireless charging table 10a includes a wireless charging device 1000, a connecting wire 2000, a first main body 3000 and a second main body 4000 (also referred to as a second board body).

The wireless charging device 1000 may use electromagnetic induction to charge a charged component. The charged component may be an electronic device such as a mobile phone, a tablet, and a notebook computer. Energy transfer is realized through energy coupling of a coil, that is, a coil may be connected with an external power supply through an interface 2000 to generate magnetic field, and then the magnetic field generates current to supply power to the charged component.

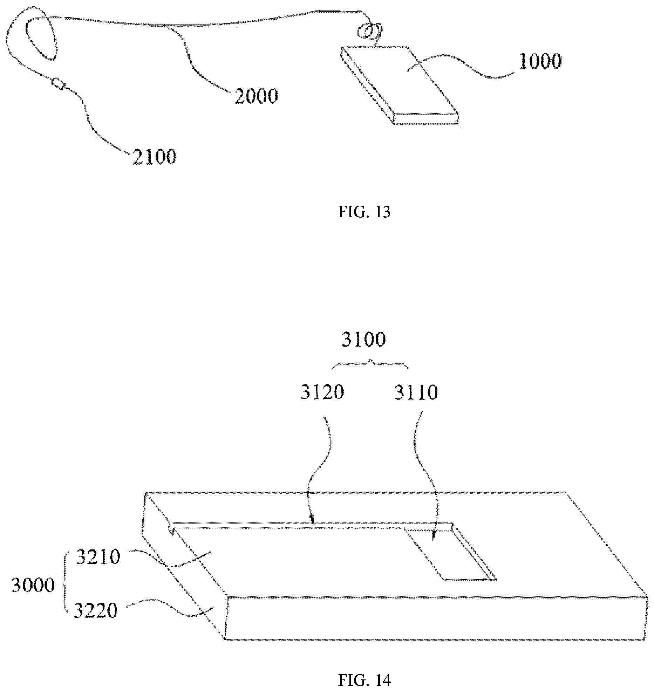

FIG. 13 shows a schematic diagram of connection between the wireless charging device 1000 and the connecting wire 2000 of the wireless charging table 10a according to an embodiment of the present disclosure. Referring to FIG. 13, the wireless charging device 1000 is used for non-contact charging of charged components. That is, the charged component can be charged without contacting the wireless charging device 1000, and then there is no need to connect a charging device to the charged component with a charging cable, thereby avoiding clutter on the table top caused by placing too many cables on the table top.

Referring to FIG. 13, one end of the connecting wire 2000 is provided with an interface 2100. The interface 2100 is used for connecting an external power supply. The other end of the connecting wire 2000 is connected with the wireless charging device 1000. When a user wants to realize wireless charging of the charged component, the interface 2100 can be connected to a socket power supply through a power cable to supply power to the wireless charging device 1000.

In some embodiments, the interface 2100 may be a USB interface or a DC power interface. The connecting wire 2000 may be a USB connection wire or a DC power wire.

Referring to FIG. 11, an accommodating groove (also referred to as an accommodating chamber) 3100 is defined in the first main body 3000. The accommodating groove 3100 is used for accommodating the wireless charging device 1000 and the connecting wire 2000. The second main body 4000 is fixedly connected with the first main body 3000 to form a table top 20 on which the charged components are placed. The second main body 4000 covers a notch of the accommodating groove 3100.

The wireless charging device 1000 and the connecting wire 2000 are placed in a groove which is at least partially closed on lateral sides, so as to prevent the wireless charging device 1000 and the connecting wire 2000 from being worn and prolong their service life. In some embodiments, the second main body 4000 and the first main body 3000 may be adhered together.

FIG. 14 shows a schematic diagram of the first main body 3000 of the wireless charging table 10 according to an embodiment of the present disclosure. Referring to FIG. 11 and FIG. 14, the accommodating groove 3100 includes a first groove 3110. The first groove 3110 is used for accommodating the wireless charging device 1000 and at least part of the connecting wire 2000.

Referring to FIG. 11 and FIG. 14, the accommodating groove 3100 further includes a second groove 3120. The second groove 3120 is used for accommodating at least part of the connecting wire 2000 and the interface 2100.

The second groove 3120 and the first groove 3110 are communicated with each other, so as to accommodate the connecting wire 2000 together.

Referring to FIG. 14, the first main body 3000 includes a first side surface 3210 and a second side surface 3220. The first side surface 3210 is adjacent to the second side surface 3220. That is, the first side surface 3210 and the second side surface 3220 have a collinear edge.

A first opening is defined in the first side surface 3210. The first opening is communicated with the first groove 3110 to facilitate placing the wireless charging device 1000 and the connecting wire 2000 in the accommodating groove 3100. A second opening is defined in the second side surface 3220. The second opening is communicated with the second groove 3120. The interface 2100 is disposed at the second opening.

In some embodiments, the charged component is placed on a support surface for wireless charging. The first side surface 3210 is disposed opposite to the support surface. Two sides of the second side surface 3220 are collinear with the support surface and the first side surface 3210, respectively.

Referring to FIG. 12, an end surface of the interface 2100 is coplanar with the second side surface 3220. In other embodiments, the end surface of the interface 2100 is located within the second groove 3120, to avoid discomfort and safety hazards caused by the interface 2100 or part of the interface 2100 being located outside of the wireless charging table 10.

In some embodiments, a part of the connecting wire 2000 connected to the interface 2100 may be made into a retractable wire. When the user needs to connect the interface 2100 to an external power supply, the interface 2100 may be pulled out of the wireless charging table 10; after the interface 2100 is connected with the external power supply, the connecting wire 2000 is reset and then the interface 2100 returns to its original position. In order to prevent the interface 2100 connected with the external power supply from protruding out of the wireless charging table 10 by force, a blocking plate may be provided at the interface 2100 to limit a position of the interface 2100.

In some embodiments, the wireless charging device 1000 and the connecting wire 2000 are fixed in the accommodating groove 3100 by a fixing part. The fixing part may be a viscous part such as tape and glue. The fixing part can prevent a position of the wireless charging device 1000 from changing with movement of the wireless charging table 10, thereby avoiding noise and wear.

In some embodiments, the first main body 3000 includes a first side surface 3210, and the second main body 4000 includes a third side surface. The first side surface 3210 and the third side surface are contact surfaces when the first main body 3000 and the second main body 4000 are assembled. That is, when the first main body 3000 is overlapped on the second main body 4000, the first side surface 3210 is in contact with the third side surface. The first side surface 3210 and the third side surface have the same shape.

In other embodiments, the shapes and sizes of the first main body 3000 and the second main body 4000 may be the same to facilitate standardized production.

In some embodiments, the first main body 3000 and the second main body 4000 are fixedly connected, so as to form a table top 20 for supporting the charged component. That is, no relative displacement occurs between the first main body 3000 and the second main body 4000.

In some embodiments, four circumferential side surfaces adjacent to the first side surface 3210 include a second side surface, a fourth side surface, a fifth side surface and a sixth side surface; and four circumferential side surfaces adjacent to the third side surface include a seventh side surface, an eighth side surface, a ninth side surface and a tenth side surface. The second side surface and the seventh side surface are coplanar; the fourth side surface and the eighth side surface are coplanar; the fifth side surface and the ninth side surface are coplanar; and the sixth side surface and the tenth side surface are coplanar.

In some embodiments, the wireless charging table 10 further includes an edge banding strip 500. The edge banding strip 500 is fixedly connected with the four circumferential side surfaces of the first main body 3000 and the four circumferential side surfaces of the second main body 4000.

In some embodiments, the edge banding strip 500 may be fixedly connected with the four circumferential side surfaces of the first main body 3000 and the four circumferential side surfaces of the second main body 4000 by bonding.

In some embodiments, a third opening 510 is defined in the edge banding strip 500. The third opening 510 is communicated with the accommodating groove 3100. The interface 2100 is located at the third opening 510. The shape and size of the third opening 510 is adapted to the interface 2100 to expose the interface 2100, thereby facilitating connection of the interface 2100 to a power supply through a charging cable.

In some embodiments, the wireless charging table 10 further includes a first sealing member. The first sealing member is movably connected with the edge banding strip 500 to cover or expose the third opening 510. When charging is required, the first sealing member is moved to expose the third opening 510, and the interface 2100 at the third opening 510 is connected to the power supply; when charging is not required, the first sealing member is moved to cover the third opening 510 to prevent dust or insects in the environment from entering the accommodating groove 3100 through the third opening 510, damaging the circuits and affecting the use.

The first main body 3000 and the second main body 4000 may also be integrally formed, which is convenient for processing and production.

In the present disclosure, the wireless charging device 1000 is packaged inside the table top 20; when a charged component needs to be charged, it is only needed to place the charged component on a corresponding position of the table top 20, thereby starting to charge the charged component. In addition, there is no notch in a use surface of the table top 20 for placing the charged components, and a groove is defined in a lateral side surface of the table top. This not only solves the problem of cluttered charging cables caused by wired charging, but also ensures the integrity and aesthetics of the use surface of the table top.

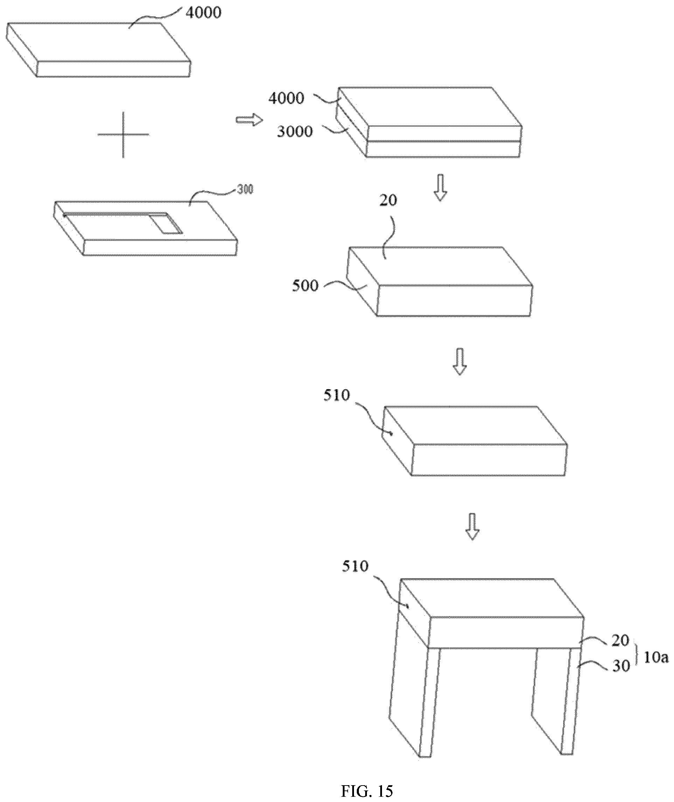

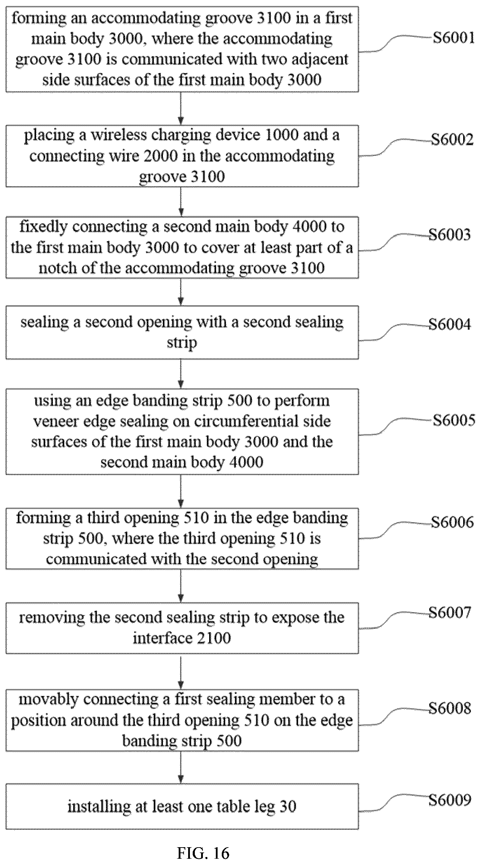

FIG. 15 shows a flow chart of assembling the wireless charging table 10 according to an embodiment of the present disclosure. FIG. 16 shows a flow chart of a method for manufacturing the wireless charging table 10 according to an embodiment of the present disclosure. Referring to FIG. 15 and FIG. 16, the method includes the following steps S6001 to S6009.

Step S6001: forming an accommodating groove 3100 in a first main body 3000, where the accommodating groove 3100 is communicated with two adjacent side surfaces of the first main body 3000.

Step S6002: placing a wireless charging device 1000 and a connecting wire 2000 in the accommodating groove 3100.

Step S6003: fixedly connecting a second main body 4000 to the first main body 3000 to cover at least part of a notch of the accommodating groove 3100.

Step S6004: sealing, with a second sealing strip, a second opening defined in the first main body 3000 and communicated with the accommodating groove 3100; where an interface 2100 is located at the second opening. In some embodiments, the second sealing strip may employ a plastic film.

Step S6005: using an edge banding strip 500 to perform veneer edge sealing on circumferential side surfaces of the first main body 3000 and the second main body 4000. In this way, before performing veneer edge sealing on circumferential side surfaces of the first main body 3000 and the second main body 4000, the second opening is sealed with the second sealing strip, to prevent dust during processing from entering the accommodating groove 3100 through the second opening.

Step S6006: forming a third opening 510 in the edge banding strip 500, where the third opening 510 is communicated with the second opening.

Step S6007: removing the second sealing strip to expose the interface 2100. After performing veneer edge sealing, the second sealing strip is removed, so that the interface 2100 can be connected to a power supply conveniently.

Step S6008: movably connecting a first sealing member to a position around the third opening 510 on the edge banding strip 500, so as to cover or expose the third opening 510 by changing positions of the first sealing member. In some embodiments, the first sealing member may employ a metal sheet.

Step S6009: installing at least one table leg 30.

In some embodiments, the table top 20 and the table leg 30 may be made of wood, glass, metal, plastic and other materials.

In some embodiments, the wireless charging table 10 may be used as a writing desk, a computer desk, an office desk, a dining table, a tea table, a bedside table, bar, etc., and has a wide range of application scenarios. The numbers, corresponding positions and rated powers of the first charging region and the second charging region may be changed according to actual needs of users and different application scenarios.

In the description of the present disclosure, it should be understood that orientation or positional relationship indicated by terms "center", "longitudinal", "lateral", "length", "width", "thickness", "upper", "lower", "front", "rear", "left", "right", "vertical", "horizontal", "top", "bottom", "inside", "outside", "clockwise", "counterclockwise", etc., or orientation or positional relationship shown in the accompanying drawings, are only for convenience of describing the present disclosure and simplifying the description, rather than indicating or implying that the referred device or element must have a specific orientation and be constructed and operated in a specific orientation, and thus cannot be construed as a limitation of the present disclosure. In addition, the terms "first" and "second" are only used for descriptive purposes, and should not be construed as indicating or implying relative importance or implying the number of indicated technical features. Thus, features defined as "first", "second" may expressly or implicitly include one or more of the features. In the description of the present disclosure, "plurality" means two or more, unless otherwise expressly and specifically defined.

In the description of the present disclosure, it should be noted that, unless otherwise expressly specified and limited, the terms "installed", "connected" and "mount" should be understood in a broad sense, for example, it may be a fixed connection or a detachable connection, or integral connection; it may be mechanical connection, electrical connection or may communicate with each other; it may be directly connected or indirectly connected through an intermediate medium; it may be internal communication of two elements or interaction of two elements. For those of ordinary skill in the art, the specific meanings of the above terms in the present disclosure can be understood according to specific situations.

In the description of the present disclosure, unless otherwise expressly specified and limited, a first feature "on" or "under" a second feature may include direct contact between the first and second features, or may include indirect contact between the first and second features through another feature between them. The first feature being "above", "over" and "on" the second feature includes the first feature being directly above or obliquely above the second feature, or simply means that the first feature is higher than the second feature. The first feature being "under" and "below" the second feature includes the first feature being directly below or obliquely below the second feature, or simply means that the first feature is lower than the second feature.

The present disclosure provides many different embodiments or examples for implementing different structures of the present disclosure. In order to simplify the description of the present disclosure, components and arrangements of specific examples are described. Of course, they are only examples and are not intended to limit the present disclosure. Further, the present disclosure may repeat reference numerals and/or reference letters in different examples, and such repetition is for the purpose of simplicity and clarity and does not in itself indicate the relationship between the various embodiments and/or settings discussed. In addition, the present disclosure provides examples of various specific processes and materials, but those of ordinary skill in the art will recognize the application of other processes and/or the use of other materials.

In the description of the specification, the description with reference to the terms "an embodiment", "some embodiments", "example", "specific example" or "some examples" means that the specific feature, structure, material or characteristic described in conjunction with the embodiment or example is included in at least one embodiment or example of the present disclosure. In the specification, the schematic representations of the above terms do not necessarily refer to the same embodiment or example. Moreover, the specific features, structures, materials or characteristics described may be combined in any one or more embodiments or examples in a suitable manner. In addition, those skilled in the art may combine the different embodiments or examples and the features of the different embodiments or examples described in the specification in case of no contradiction.

Although the embodiments of the present disclosure have been shown and described above, it may be understood that the above embodiments are exemplary and should not be construed as limiting the present disclosure. Those ordinary skilled in the art may make changes, modifications, replacements and transformations on the above-described embodiments within the scope of the present disclosure.

## Claims

1. A wireless charging table, comprising:
a board assembly; wherein the board assembly includes a table top for placing charged components, and the table top is provided with a plurality of charging regions;
a wireless charging device in an accommodating chamber within the board assembly; wherein the wireless charging device is configured for non-contact charging of the charged components located on the plurality of charging regions;
wherein the wireless charging device is configured to provide different rated powers to the charged components on different ones of the plurality of charging regions.

2. The wireless charging table for claim 1, wherein the wireless charging device includes:
at least one first charging device in the accommodating chamber; wherein each first charging device is configured to provide a first rated power; and
at least one second charging device in the accommodating chamber; wherein each second charging device is configured to provide a second rated power;
wherein the first rated power is greater than the second rated power.

3. The wireless charging table for claim 2, wherein the plurality of charging regions at least include:
a first charging region; wherein the first charging device is configured to provide the first rated power to a charged component on the first charging region; and
a second charging region; wherein the second charging device is configured to provide the second rated power to a charged component on the second charging region.

4. The wireless charging table for claim 3, wherein the plurality of charging regions include at least one first charging region and at least one second charging region; the first charging region is corresponding to the first charging device in a one-to-one manner; and the second charging region is corresponding to the second charging device in a one-to-one manner.

5. The wireless charging table for claim 3, wherein each first charging device includes a first charging coil and a first circuit board that are electrically connected; the first charging coil is located within a projection of the first charging region onto the accommodating chamber;
each second charging device includes a second charging coil and a second circuit board that are electrically connected; the second charging coil is located within a projection of the second charging region onto the accommodating chamber.

6. The wireless charging table for claim 3, wherein the board assembly includes:
a first board body; wherein the first board body includes a first board surface serving as the table top and a second board surface disposed opposite to the first board surface;
a second board body connected to the first board body; wherein a third board surface of the second board body is in contact with the second board surface; and
an edge banding strip fixedly connected to circumferential side surfaces of the first board body and the second board body.

7. The wireless charging table for claim 6, wherein the accommodating chamber includes an accommodating groove defined in the first board body; a first opening is defined in the second board surface; a notch of the accommodating groove is communicated with the first opening;
wherein each first charging device at least includes a first charging coil, and each second charging device includes a second charging coil and a second circuit board that are electrically connected;
the first charging coil, the second charging coil and the second circuit board are all fixed on a bottom wall of the accommodating groove.

8. The wireless charging table for claim 7, wherein the second board body includes a fourth board surface disposed opposite to the third board surface; the accommodating chamber includes: an accommodating hole defined through the second board body;
wherein a second opening is defined in the third board surface; a third opening is defined in the fourth board surface; openings of the accommodating hole are communicated with the second opening and the third opening, respectively;
the accommodating groove is communicated with the accommodating hole;
a projection of the second opening onto the bottom wall of the accommodating groove covers the second circuit board.

9. The wireless charging table for claim 7, wherein the wireless charging table further includes:
an elastic member disposed between the second charging coil and the second board body; wherein one side of the elastic member is in contact with the second charging coil, and the other side of the elastic member is in contact with the third board surface; and/or,
an elastic member disposed between the first charging coil and the second board body; wherein one side of the elastic member is in contact with the first charging coil, and the other side of the elastic member is in contact with the third board surface.

10. The wireless charging table for claim 8, wherein the wireless charging table further includes:
a first module configured to be connected to an external power supply and provide a voltage higher than a first voltage to the first charging device;
a second module configured to be connected to the external power supply and provide a voltage lower than the first voltage to the second charging device;
wherein the first voltage is a rated voltage provided by the external power supply;
wherein a power cable connected to the first charging device is connected to the first module through a power connector; a power cable connected to the second charging device is connected to the second module through a power connector;
wherein the first module at least includes a step-up constant voltage and constant current module, and the second module at least includes a step-down constant voltage and constant current module.

11. The wireless charging table for claim 10, wherein the wireless charging table further includes:
an installation plate connected to the board assembly;
wherein the first module and the second module are both connected to one side of the installation plate facing the board assembly; and the installation plate configured to cover the third opening;
wherein the first module and the second module are capable of being placed into the accommodating hole through the third opening.

12. The wireless charging table for claim 11, wherein the first charging device at least includes a first circuit board; the first circuit board is connected to the side of the installation plate facing the board assembly; and the first circuit board is capable of entering into the accommodating hole through the third opening;
the installation plate includes a fifth board surface and a sixth board surface disposed opposite to each other; the second board body is located between the first board body and the installation plate; the fifth board surface is in contact with the fourth board surface.

13. The wireless charging table for claim 11, wherein the wireless charging table further includes:
a power socket connected to one side of the installation plate facing the board assembly and capable of entering the accommodating hole through the third opening;
wherein the installation plate is provided with a wire feed through hole; the wire feed through hole is communicated with the accommodating hole; and jacks of the power socket are located at an opening of the wire feed through hole for connecting an external power supply;
wherein the first module and the second module are connected to the power socket in parallel.

14. The wireless charging table for claim 11, wherein the installation plate is provided with at least one heat dissipation hole; the heat dissipation hole is communicated with the accommodating chamber for allowing gas in the accommodating chamber to communicate with gas in external environment.

15. The wireless charging table for claim 1, wherein the wireless charging table further includes a connecting wire;
one end of the connecting wire is provided with an interface for connecting an external power supply; the other end of the connecting wire is connected with the wireless charging device;
the board assembly includes a first main body and a second main body;
an accommodating groove is defined in the first main body; the accommodating groove is configured to accommodate the wireless charging device and the connecting wire;
the second main body is fixedly connected with the first main body to form the table top on which the charged components are placed; and the second main body covers at least a part of a notch of the accommodating groove to form the accommodating chamber.

16. The wireless charging table for claim 15, wherein the accommodating groove includes:
a first groove configured to accommodate the wireless charging device and at least part of the connecting wire;
a second groove configured to accommodate at least part of the connecting wire and the interface;
wherein the second groove and the first groove are communicated with each other.

17. The wireless charging table for claim 16, wherein the first main body includes:
a first side surface; wherein a first opening is defined in the first side surface, and the first opening is communicated with the first groove; and
a second side surface; wherein a second opening is defined in the second side surface, and the second opening is communicated with the second groove;
wherein the first side surface is adjacent to the second side surface.

18. The wireless charging table for claim 15, wherein the first main body includes a first side surface, and the second main body includes a third side surface; the first side surface and the third side surface are contact surfaces when the first main body and the second main body are assembled;
wherein the first side surface and the third side surface have the same shape;
wherein four circumferential side surfaces adjacent to the first side surface include a second side surface, a fourth side surface, a fifth side surface and a sixth side surface;
four circumferential side surfaces adjacent to the third side surface include a seventh side surface, an eighth side surface, a ninth side surface and a tenth side surface;
the second side surface and the seventh side surface are coplanar; the fourth side surface and the eighth side surface are coplanar; the fifth side surface and the ninth side surface are coplanar; and the sixth side surface and the tenth side surface are coplanar;
the wireless charging table further includes an edge banding strip; and the edge banding strip is fixedly connected with the four circumferential side surfaces of the first main body and the four circumferential side surfaces of the second main body.

19. The wireless charging table for claim 18, wherein a third opening is defined in the edge banding strip; the third opening is communicated with the accommodating groove, and the interface is located at the third opening;
wherein the wireless charging table further includes: a first sealing member; the first sealing member is movably connected with the edge banding strip to cover or expose the third opening.

20. The wireless charging table for claim 6, wherein the accommodating chamber further includes a power interface; the power interface is defined in a surface of the second board body opposite to the first board body, and is electrically connected to the wireless charging device through a connecting wire provided within the accommodating chamber.
